# EUROPÄISCHE PATENTSCHRIFT

(11) **EP 2 850 396 B1**
(45) Veröffentlichungstag und Bekanntmachung des Hinweises auf die Patenterteilung: **27.04.2016**
(21) Anmeldenummer: 12740073.7
(22) Anmeldetag: 19.06.2012
(51) Int. Cl.: G01D 5/245, G08C 19/16, G08C 19/28, H02P 29/00

(54) **VERFAHREN ZUR INFORMATIONSÜBERMITTELUNG UND VORRICHTUNG ZUR AUSFÜHRUNG DES VERFAHRENS**
METHOD FOR INFORMATION TRANSFER AND DEVICE FOR CARRYING OUT THE METHOD
PROCEDE DE TRANSFERT D'INFORMATIONS ET DISPOSITIF POUR RÉALISER LE PROCÉDÉ

(43) Veröffentlichungstag der Anmeldung: 25.03.2015
(73) Patentinhaber: Siemens Aktiengesellschaft, 80333 München (DE)
(72) Erfinder: BRAATZ, Uwe, 30455 Hannover (DE); NOLTE, Uwe, 30890 Barsinghausen (DE)
(86) Internationale Anmeldenummer: PCT/EP2012/061653
(87) Internationale Veröffentlichungsnummer: WO 2013/189518

(56) Entgegenhaltungen:
- DE-A1-102005 029 410
- DE-A1-102007 029 824
- DE-A1-102010 023 535
- US-A- 4 976 552

## Beschreibung

Die Erfindung betrifft ein Verfahren zur Übermittelung von Informationen zwischen einem Elektromotor und einer Motorsteuerungseinheit mittels zumindest eines Transfersignals sowie eine Vorrichtung zur Ausführung eines solchen Verfahrens.

In vielen Fällen ist es erwünscht oder sogar notwendig, Informationen von einem Motor, insbesondere einem Elektromotor, oder aus dessen unmittelbarem Umfeld an eine Steuerungseinheit oder ein Steuergerät zu übermitteln. Bei Elektromotoren ist es z.B. üblich, die Drehstellung, die Drehgeschwindigkeit sowie die Drehrichtung des Rotors bezogen auf den Stator sensorisch zu erfassen und die so gewonnenen Informationen an ein Steuergerät zu übermitteln, mit welchem u.a. auf der Basis dieser Informationen der Elektromotor angesteuert wird.

Die jeweilige Vorrichtung zur Übermittelung der Informationen ist dabei typischerweise für eine bestimmte Informationsmenge pro Zeiteinheit ausgelegt, sodass zur Übermittelung von zusätzlichen Informationen, die beispielsweise im Falle eines nachträglich verbauten Sensors anfallen, eine eigene, also zusätzliche, Schnittstelle zwischen dem Motor und dem Steuergerät nachgerüstet werden muss.

Die DE 10 2010 023 535 A1 offenbart ein Datenkommunikationsverfahren in einem Bordnetzsystem mit einem elektrischen Signalsender und einem Signalempfänger. Das Bordnetzsystem ist derart eingerichtet, dass der Signalsender ein moduliertes Nutzsignal und ein Bezugssignal zur Demodulation des modulierten Nutzsignals drahtlos senden kann.

In der DE 10 2005 029 410 A1 ist eine Vorrichtung und ein Verfahren zur Kommunikation zwischen einem Regler für eine Spannungsquelle und einem Steuergerät in einem Kraftfahrzeug beschrieben. Hier werden Zusatzinformationen zur Regelung einer elektrischen Maschine einem Basissignal überlagert. In bevorzugter Weise ist mittels eines über die dynamische Steuerleitung übertragenen Signals eine Spannungsreferenz, insbesondere für Signale einer elektrischen Leitung, darstellbar.

Aus der DE 10 2007 029 824 A1 ist eine Vorrichtung zum Erfassen von Quadratursignalen bekannt.

Ausgehend hiervon liegt der Erfindung die Aufgabe zugrunde, ein verbessertes Verfahren zur Übermittelung von Informationen sowie eine Vorrichtung zur Ausführung eines entsprechenden Verfahrens anzugeben. Einer Grundidee entsprechend sollen dabei insbesondere Zusatzinformationen übermittelt werden, wobei diese quasi durch Modulation vorhandener Informationen übermittelt werden, ohne das die vorhandenen Informationen in wesentlicher Weise verändert werden.

Bezüglich des Verfahrens wird diese Aufgabe erfindungsgemäß durch ein Verfahren mit den Merkmalen des Anspruchs 1 gelöst. Die rückbezogenen Ansprüche beinhalten teilweise vorteilhafte und teilweise für sich selbst erfinderische Weiterbildungen dieser Erfindung.

Das Verfahren dient zur Übermittelung von Informationen zwischen einem Elektromotor oder dessen unmittelbarem Umfeld und einer Motorsteuerungseinheit, wobei die Übermittelung mit Hilfe zumindest eines Transfersignals vorgenommen wird. Hierbei werden als Informationen Bewegungszustandsinformationen des Elektromotors einerseits und Zusatzinformationen andererseits über zumindest einen Übertragungskanal übermittelt, wobei die Bewegungszustandsinformationen in Form zumindest eines Basissignals vorliegen und wobei die Zusatzinformationen mit Hilfe des Basissignals übermittelt werden.

Jenes Verfahren ist dabei insbesondere auch für Anwendungsszenarien konzipiert, bei denen eine Schnittstelle zwischen dem Elektromotor und der Motorsteuerungseinheit für die Übermittelung von Bewegungszustandsinformationen gegeben ist und bei denen zusätzlich oder nachträglich die pro Zeiteinheit zu übermittelnde Menge an Informationen durch Zusatzinformationen erhöht wird. Die Übermittelung der Zusatzinformationen wird dann unter Ausnutzung der bereits vorhandenen Schnittstelle bewerkstelligt. Hierzu werden die Zusatzinformationen bevorzugt auf ein Basissignal, welches die Bewegungszustandsinformationen trägt, aufmoduliert und dann mit Hilfe eines Transfersignals übermittelt. Die Aufmodulation der Zusatzinformationen auf das Basissignal erfolgt dabei bevorzugt innerhalb der protokollspezifischen Zeittoleranzen, so dass der Informationsgehalt des Basissignals im Transfersignal unverändert bleibt.

Ist also beispielsweise eine Vorrichtung mit einem Elektromotor, einem Steuergerät, und einer sogenannten "Quadratur-Schnittstelle" (Quadrature Encoder Interface) gegeben, bei der Bewegungen des Rotors des Elektromotors gegen den Stator mittels eines Inkrementalgebers sensorisch erfasst werden und bei der diese Bewegungszustandsinformationen über die "Quadratur-Schnittstelle" an das Steuergerät übermittelt werden, dann wird eben diese bereits vorhandene "Quadratur-Schnittstelle" gemäß dem hier vorgestellten Verfahren auch genutzt, um Zusatzinformationen, die beispielsweise aufgrund eines zusätzlich oder nachträglich in die Vorrichtung implementierten und in der Nähe des Elektromotors installierten Temperatursensors generiert werden, an das Steuergerät zu übermitteln. Dementsprechend wird z.B. auf den Einbau eines Kabels als separate Signalleitung zwischen dem Temperatursensor und dem Steuergerät verzichtet.

Als Zusatzinformationen sind hierbei nicht nur Informationen oder Daten zu verstehen, die mittels Sensoren oder ähnlicher Funktionseinheiten, wie z.B. Temperatursensor, Betriebsstundenzähler, Zähler für die Gesamtzahl an Rotorumdrehungen oder auch externe Sensoren, generiert werden, sondern auch Informationen, welche insbesondere als unveränderliche Parameter in einem Informationsspeicher hinterlegt sind. So ist es z.B. üblich Baugruppen oder Geräte mit einem sogenannten "elektronischen Typenschild" zu verstehen, welches u.a. eine einfachere Identifizierbarkeit ermöglicht. Insbesondere wenn mehrere solcher Baugruppen oder Geräte zur Ausbildung eines Systems miteinander kombiniert werden und diese Baugruppen oder Geräte im System miteinander kommunizieren, erlaubt ein solches "elektronisches Typenschild" eine Erkennung der Baugruppen bzw. Geräte untereinander. Bezogen auf das vorherige Beispiel wären also der Elektromotor und das Steuergerät jeweils mit einem "elektronischen Typenschild" versehen, sodass beispielsweise bei einem defektbedingten Austausch des Steuergerätes dieses den Elektromotor über das "elektronische Typenschild" des Elektromotors erkennt und nachfolgend durch Anpassung von Parametern im Steuergerät den Elektromotor wie vorgesehen ansteuert. Auch besteht nicht zwingend die Notwendigkeit die Zusatzinformationen permanent zu übermitteln, da diese z.B. auch temporär, also in gewissen zeitlichen Abständen anfallen können.

Insbesondere, wenn die Zusatzinformationen nicht permanent zu übermitteln sind, ist eine Verfahrensvariante von Vorteil, bei der die Zusatzinformationen in Form von Datenpaketen übermittelt werden. Dabei wird eine Verfahrensvariante bevorzugt, bei der zur Kennzeichnung des Anfangs und des Endes eines jeden Datenpaketes je ein Triggersignal mit dem Transfersignal übermittelt wird. Die Kennzeichnung des Anfangs und des Endes eines Datenpaketes bei der Übermittelung von Daten ist prinzipiell bekannt und kommt vor allem dann zum Einsatz, wenn für eine Kommunikation zwischen zwei Baugruppen oder zwei Geräten kein gemeinsamer Referenztakt genutzt wird.

Bevorzugt wird weiter eine Verfahrensvariante, bei der zur Generierung des Transfersignals Triggersignale in das Basissignal eingefügt werden und bei der das Transfersignal in den Zeitabschnitten zwischen den Triggersignalen dem unveränderten Basissignal entspricht. Das bedeutet, dass die meiste Zeit das Basissignal selbst als Transfersignal genutzt wird und dass lediglich in bestimmten zeitlichen Abständen das Basissignal bei der Transformation in das Transfersignal manipuliert wird, um ein Triggersignal im Transfersignal zu erzeugen. Im Prinzip nutzt man dabei den gegebenen zeitlichen Verlauf des Basissignals und die dadurch gegebenen Informationen aus, um die Zusatzinformationen zu übermitteln, wobei dem Signalempfänger, also der Motorsteuerungseinheit, mitgeteilt wird, in welchem Zeitabschnitt des Basissignals die zu übermittelnden Zusatzinformationen zu finden sind. Auf diese Weise lässt sich z.B. dafür sorgen, dass eine Auswerteeinheit, die zur Auswertung des Basissignals eingerichtet ist, für diese Auswertung auch mit dem Transfersignal gespeist werden kann. Eine vorherige Extraktion des Basissignals aus dem Transfersignal ist somit nicht notwendig und die Auswerteeinheit muss auch nicht angepasst werden, um die Bewegungszustandsinformationen, die im Basissignal enthalten sind, aus dem Transfersignal herauszulesen. Das Transfersignal wird dann beispielsweise parallel in eine zweite Auswerteeinheit eingespeist, welche aus dem Transfersignal die Zusatzinformationen ausliest.

Vorteilhaft ist weiter eine Verfahrensvariante, bei der mit jedem Datenpaket ein und insbesondere genau ein Zahlenwert übermittelt wird, der durch die Anzahl von Ereignissen im zeitlichen Verlauf des Transfersignals zwischen zwei Triggersignalen gegeben ist, und bei der als Zahlenwerte bevorzugt nur Werte aus einer fest vorgegebenen Wertemenge genutzt werden. Auf diese Weise wird u.a. die Datenmenge eines jeden Datenpaketes festgelegt, wobei als Datenmenge bevorzugt ein Nibble (16 mögliche Werte oder Zustände) vorgesehen ist. Diese Verfahrensvariante ist beispielsweise auch geeignet für eine Vorrichtung mit einem Elektromotor, bei dem die Drehstellung des Rotors mittels eines digitalen Absolutpositionsgebers erfasst wird, mit einem Steuergerät und mit einer Schnittstelle zwischen dem Elektromotor und dem Steuergerät derart, dass die mittels des digitalen Absolutpositionsgebers ermittelten Bewegungszustandsinformationen mit Hilfe von Datenpaketen übermittelt werden, zwischen denen jeweils eine Pause gegeben ist. In einem solchen Fall wird dann beispielsweise ein Triggersignal dadurch erzeugt, dass ein einfacher Rechteckpuls während einer solchen Pause übertragen wird, sodass das Transfersignal zwischen zwei Datenpaketen einen Rechteckpuls aufweist, und als Ereignis im zeitlichen Verlauf des Transfersignals wird eine Pause zwischen zwei Datenpaketen gewertet. Das heißt, dass die Anzahl von Ereignissen im zeitlichen Verlauf des Transfersignals in diesem Fall der Anzahl von Pausen zwischen zwei Triggersignalen entspricht.

Zweckmäßig ist zudem eine Verfahrensvariante, bei der zur Übermittelung der Informationen zumindest zwei Transfersignale genutzt werden, bei der jedes Transfersignal über einen eigenen Übertragungskanal, also zum Beispiel über eine elektrische Leitung, übermittelt wird und bei der die Bewegungszustandsinformationen in Form zweier Basissignale vorliegen. Auf diese Weise wird erreicht, dass das hier beschriebene Verfahren bei möglichst vielen Anwendungsszenarien genutzt werden kann.

Insbesondere ist dabei zwischen den beiden Basissignalen eine Phasenbeziehung gegeben, wobei eines der beiden Basissignale gemäß einer bevorzugten Verfahrensvariante unverändert als eines der Transfersignale genutzt wird und wobei das andere Basissignal durch Manipulation der Phasenbeziehung in das andere Transfersignal umgewandelt wird. Die Zusatzinformationen werden dann mittels der Manipulation der Phasenbeziehung in die Transfersignale eingebunden.

Einer weiteren bevorzugten Verfahrensvariante entsprechend fungiert eine bestimmte Phasenbeziehung zwischen den Transfersignalen als Triggersignal. Im einfachsten Fall werden z.B. zwei Transfersignale genutzt, zwischen denen eine zeitabhängige Phasenbeziehung besteht. Für diese Phasenbeziehung sind dann ein Basiswert und ein Triggerwert als mögliche Werte vorgesehen, wobei die meiste Zeit über der Basiswert vorliegt und wobei zur Erzeugung eines Triggersignals ein zeitlich begrenzter Wechsel der Phasenbeziehung auf den Triggerwert erzwungen wird.

Zudem ist es vorteilhaft eine Zeitquantisierung mit diskreten Werten vorzunehmen, sodass auch für die Phasenbeziehung nur diese Werte vorgesehen sind und sodass diese Werte zur Kodierung der Zusatzinformationen genutzt werden können. Bezogen auf das vorherige Beispiel sind dann also nicht mehr zwei mögliche Werte für die zeitabhängige Phasenbeziehung einstellbar, stattdessen ist eine größere Anzahl von Werten vorgesehen. Dabei wird dann insbesondere eine Modulation der Phasenbeziehung vorgenommen, sodass die Zusatzinformationen mit Hilfe dieser Phasenmodulation in die Transfersignale eingebunden sind.

Zweckmäßig ist darüber hinaus eine Variante des Verfahrens, bei der die Bewegungszustandsinformationen des Motors mittels eines Inkrementalgebers generiert werden und bei der zur Übermittelung der Informationen zwischen dem Elektromotor oder dessen unmittelbaren Umfeld und der Motorsteuerungseinheit eine "Quadratur-Schnittstelle" (Quadrature Encoder Interface) mit zwei Übertragungskanälen genutzt wird. Diese Verfahrensvariante stellt eine Anpassung an ein besonders typisches Anwendungsszenario dar. Dabei werden bevorzugt als Basissignale und als Transfersignale jeweils binäre Signale genutzt und weiter bevorzugt ist ein jeweiliges Ereignis durch einen Signalpegelwechsel gegeben. Wird also z.B. ein Zahlenwert übermittelt, der gemäß einer vorgesehenen Kodierung einer bestimmten Zusatzinformation entspricht, so ist dieser Zahlenwert bevorzugt durch die Anzahl der Signalflanken eines binären Transfersignals gegeben. Dabei sind insbesondere im Falle von zwei Transfersignalen mehrere mögliche Varianten vorgesehen, wobei gemäß einer Variante nur die steigenden Flanken eines Transfersignals gezählt werden, wobei gemäß einer weiteren Variante nur die fallenden Flanken eines Transfersignals gezählt werden, wobei gemäß einer weiteren Variante die steigenden Flanken beider Transfersignale gezählt werden usw.. Besonders bevorzugt ist die Variante, bei der alle Flanken, also die steigenden und die fallenden Flanken beider Transfersignale, gezählt werden, da hier die Datentransferrate für die Zusatzinformationen am größten ist.

Die zeitabhängige Phasenbeziehung zwischen den beiden Transfersignalen ist in diesem Fall durch den zeitlichen Abstand zwischen zwei aufeinander folgenden Signalpegelwechseln in den beiden Transfersignalen gegeben. Dieser zeitliche Abstand hängt dabei von der Drehgeschwindigkeit des Rotors des Elektromotors ab. Daher wird zum Beispiel eine Zeitquantisierung derart vorgegeben, dass durch eine entsprechende Ansteuerung des Elektromotors durch die Motorsteuerungseinheit nur diskrete Drehgeschwindigkeiten für den Rotor vorgegeben werden. Bevorzugt wird allerdings eine Zeitquantisierung derart, dass durch eine entsprechende Veränderung, ähnlich wie bei einer Analog-Digital-Umsetzung, der Basissignale beispielsweise in einem Modulator nur diskrete Drehgeschwindigkeiten mit den Transfersignalen übermittelt werden. Infolgedessen sind bei einer typischen Phasenlage von 90° zwischen den beiden Transfersignalen auch nur diskrete Zeitabstände zwischen zwei aufeinander folgenden Signalpegelwechseln erlaubt. Der Wertebereich zwischen zwei derart vorgegebenen Werten für die Phasenbeziehung steht dann zur Verfügung, um die Zusatzinformationen durch eine Manipulation der Phasenbeziehung in die Transfersignale einzubinden, so dass sich die Transfersignale insbesondere durch eine geänderte Phasenbeziehung von den Basissignalen unterscheiden.

Darüber hinaus ist eine Verfahrensvariante von Vorteil, bei der bedarfsweise in Abhängigkeit des Betriebszustandes des Elektromotors zumindest eines der Transfersignale durch Superposition eines der Basissignale und eines Zusatzsignals, welches die Zusatzinformationen trägt, generiert wird. Werden also z.B. binäre Basissignale mittels eines Inkrementalgebers in einem Elektromotor erzeugt und ist die Anzahl der Flanken dieser Basissignale als Anzahl von Ereignissen im zeitlichen Verlauf des Transfersignals zwischen zwei Triggersignalen vorgesehen, so steht die Datenübertragungsrate für die Zusatzinformationen in direktem Zusammenhang mit der Drehgeschwindigkeit des Rotors des Elektromotors, also der Motordrehzahl. Je nach Anwendungsfall kann deshalb die Datenübertragungsrate für die Übermittelung der Zusatzinformationen bei niedrigen Motordrehzahlen zu gering sein, sodass in diesen Fällen zur Sicherstellung einer ausreichenden Datenübertragungsrate die Anzahl der Ereignisse, also z.B. der Flankenwechsel, im Transfersignal gegenüber dem Basissignal zusätzlich erhöht wird.

Bevorzugt wird dabei insbesondere eine Verfahrensvariante, bei der das Zusatzsignal als eine Abfolge von Pulsen erzeugt wird, bei der die Motorsteuerungseinheit einen Zähler umfasst, mit dem die Transfersignale ausgewertet werden und der die Bewegungszustandsinformationen als zeitabhängigen Zählerwert ausgibt, und bei der das Zusatzsignal derart generiert wird, dass sich zwar der zeitliche Verlauf nicht jedoch der Zählerwert durch einen Puls ändert. Das bedeutet, dass zum Beispiel der Zähler beide Flanken eines Rechteckpulses auswertet und dass sich die beiden dadurch gegebenen Änderungen des Zählerwertes aufheben.

Insbesondere bevorzugt ist außerdem eine Verfahrensvariante, bei der die Motorsteuerungseinheit einen Basiszähler und einen Zusatzzähler umfasst, wobei der Basiszähler jeden Flankenwechsel zählt und wobei der Zusatzzähler jeweils die Flankenwechsel zwischen zwei Triggersignalen zählt und ausgibt und wobei der Zusatzzähler mit jedem Triggersignal wieder auf einen Ausgangswert zurückgesetzt wird. Der Basiszähler gibt dann die Bewegungszustandsinformationen als zeitabhängigen Basiszählerwert aus und der Zusatzzähler gibt die Zusatzinformationen als Abfolge von Zusatzzählerwerten aus. Die Transfersignale werden hierbei parallel in beide Zähler eingespeist.

Die gestellte Aufgabe bezüglich der Vorrichtung wird durch eine Vorrichtung mit den Merkmalen des Anspruchs 15 gelöst.

Ausführungsbeispiele der Erfindung werden nachfolgend anhand einer schematischen Zeichnung näher erläutert. Darin zeigen:
- FIG 1: in einer Blockschaltbilddarstellung eine Antriebseinheit umfassend einen Elektromotor und eine Motorsteuerungseinheit,
- FIG 2: in einem Diagramm ausschnittsweise den zeitlichen Verlauf zweier Basissignale bei konstanter Drehgeschwindigkeit des Elektromotors,
- FIG 3: in einem zweiten Diagramm ausschnittsweise den zeitlichen Verlauf zweier Transfersignale bei konstanter Drehgeschwindigkeit des Elektromotors und
- FIG 4: in einem dritten Diagramm ausschnittsweise den zeitlichen Verlauf der zwei Basissignale, der zwei Transfersignale sowie zweier Zählerwerte bei geringer Drehgeschwindigkeit des Elektromotors.

Einander entsprechende Teile sind in allen Figuren jeweils mit den gleichen Bezugszeichen versehen.

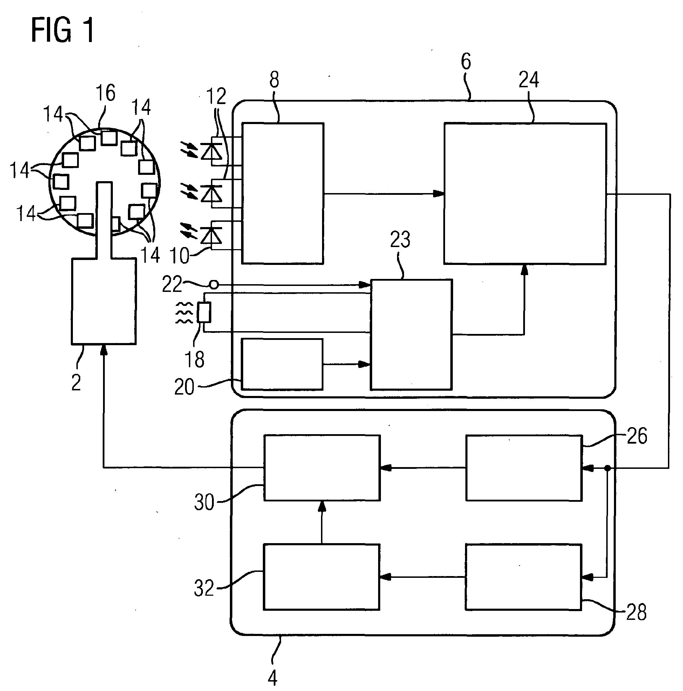

Im nachfolgend beschriebenen Ausführungsbeispiel fungiert ein Elektromotor 2 exemplarisch als Antriebseinheit einer nicht näher dargestellten Aufzugstür. Der Elektromotor 2 wird dabei, wie in FIG 1 gezeigt, mit Hilfe einer Motorsteuerungseinheit 4 gesteuert und außerdem mittels einer Sensoreinheit 6 überwacht, wobei die Sensoreinheit 6 Bewegungszustandsinformationen des Elektromotors 2 und Zusatzinformationen an die Motorsteuerungseinheit 4 übermittelt.

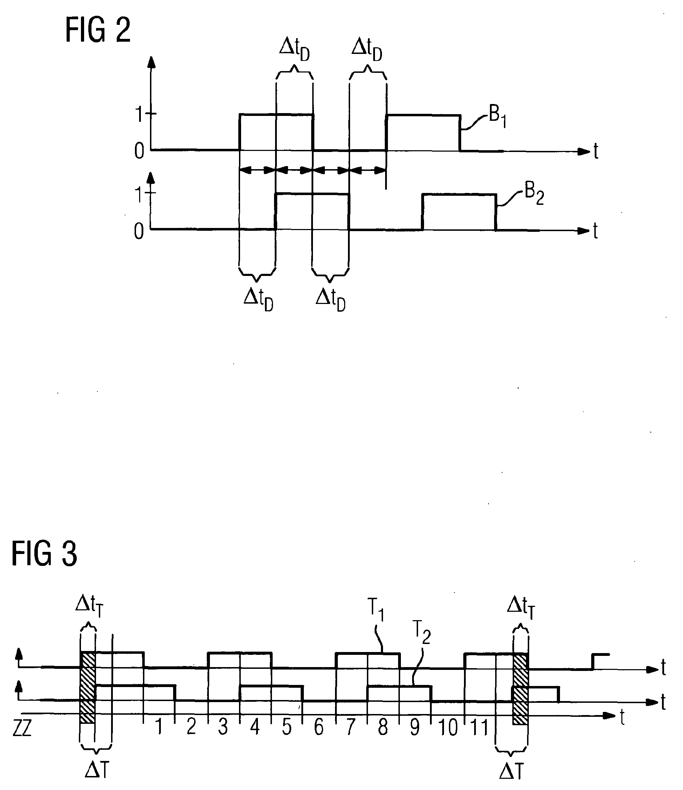

Zur Generierung der Bewegungszustandsinformationen umfasst die Sensoreinheit 6 einen Inkrementalgeber 8, der im Ausführungsbeispiel nach dem an sich bekannten Prinzip der fotoelektrischen Abtastung arbeitet. Dazu weist der Inkrementalgeber 8 eine Leuchtdiode 10 und zwei der Leuchtdiode 10 gegenüberliegende Fotodioden 12 auf. In den Zwischenraum zwischen der Leuchtdiode 10 und den leicht versetzt zueinander angeordneten Fotodioden 12 ragt eine mit Schlitzen 14 versehene und auf einer Antriebsachse sitzende Kodierscheibe 14 umfangsseitig hinein, so dass die Fotodioden 12 zeitlich versetzt mit Licht von der Leuchtdiode 10 beleuchtet werden, wenn ein Schlitz 14 der Kodierscheibe 16 an den Fotodioden 12 vorbeibewegt wird. Rotiert nun die Antriebsachse mitsamt der Kodierscheibe 16, so generiert der Inkrementalgeber 8 zwei binäre Rechtecksignale als Basissignale B1 und B2, die wie in FIG 2 angedeutet aufgrund des räumlichen Versatzes der beiden Fotodioden 12 beispielsweise um 90° phasenverschoben sind. Jedes der beiden Basissignale B1,B2 wird dabei mittels einer Fotodiode 12 erzeugt.

Außer den Bewegungszustandsinformationen stehen in der Sensoreinheit 6 noch weitere Informationen als Zusatzinformationen zur Verfügung, die zum Beispiel mit Hilfe zusätzlicher Sensoren, wie zum Beispiel einem Temperatursensor 18 generiert werden. Des Weiteren liegen Zusatzinformationen in der Sensoreinheit 6 vor, die in einem Informationsspeicher 20 hinterlegt sind. Darüber hinaus werden bei Bedarf der Sensoreinheit 6 weitere Zusatzinformationen über einen Dateneingang 22 von außen zugeführt. Somit ist es zum Beispiel möglich, nachträglich weitere Sensoren als externe Sensoren hinzuzufügen, deren Messsignale dann über den Dateneingang 22 der Sensoreinheit 6 zugeführt werden. Alle Zusatzinformationen werden in einer Kodierungseinheit 23 gesammelt und für die Weiterverarbeitung aufbereitet, gegebenenfalls umkodiert und zu Datenpaketen zusammengestellt.

Gemäß der Grundidee des hier vorgestellten Verfahrens sollen die in der Sensoreinheit 6 zur Verfügung stehenden Zusatzinformationen nicht über einen eigenen Übertragungskanal sondern mit Hilfe der Basissignale B1,B2, welche die Bewegungszustandsinformationen des Elektromotors 2 transportieren, an die Motorsteuerungseinheit 4 übermittelt werden. Dazu ist in die Sensoreinheit 6 ein Modulator 24 integriert, in den die Basissignale B1 und B2 sowie die aufbereiteten Zusatzinformationen eingespeist werden. Im Modulator 24 werden basierend auf den Basissignalen B1 und B2 zwei Transfersignale T1 und T2 generiert, in denen die Bewegungszustandsinformationen und die Zusatzinformationen enthalten sind. Die beiden Transfersignale T1,T2 werden dann von der Sensoreinheit 6 über eine "Quadratur-Schnittstelle" (Quadrature Encoder Interface) an die Motorsteuereinheit 4 weitergegeben und in der Motorsteuerungseinheit 4 parallel in eine Basisauswerteeinheit 26 und einen Demodulator 28 einspeist.

In der Basiseinheit 26 werden die Transfersignale T1,T2 hinsichtlich der Bewegungszustandsinformationen ausgewertet, wobei zeitabhängige Werte für die Drehstellung, die Drehgeschwindigkeit und die Drehrichtung der Kodierscheibe 16 ausgegeben und an eine Steuerungslogik 30 der Motorsteuerungseinheit 4 weitergegeben werden. Mittels des Demodulators 28 werden die Datenpakete aus den Transfersignalen T1 T2 extrahiert und an eine Dekodierungseinheit 32 weitergegeben. In der Dekodierungseinheit 32 werden die Zusatzinformationen wieder aufbereitet, gegebenenfalls dekodiert oder umkodiert und nachfolgend der Steuerungslogik 30 zugeführt.

Auf der Basis der Bewegungszustandsinformationen und/oder der Zusatzinformationen generiert die Steuerungslogik 30 ein Steuersignal, welches an den Elektromotor 2 übertragen wird und diesen steuert.

Bei den beiden vom Inkrementalgeber 8 ausgegebenen Basissignalen B1 und B2 handelt es sich um binäre Signale oder Rechtecksignale mit zwei definierten Zuständen oder Signalpegeln, die als Zustand 0, kurz 0 oder "low", und Zustand 1, kurz 1 oder "high", bezeichnet werden. Dabei hängt die Dauer eines Zustandes oder der Zeitabstand zwischen zwei Signalpegelwechseln und damit die Signalpegelwechselfrequenz in jedem der Basissignalen B1 und B2 einerseits von der Ausgestaltung und der Verteilung der Schlitze 14 auf der Kodierscheibe 16 und andererseits von der Drehgeschwindigkeit der Kodierscheibe 16 und damit von der Motordrehzahl ab. Bei einer konstanten Drehgeschwindigkeit der Kodierscheibe 16 weisen die beiden Basissignale B1 und B2 einen identischen jedoch um 90° phasenverschobenen zeitlichen Verlauf auf, wie dies in FIG 2 ausschnittsweise dargestellt ist. Nach an sich bekannter Art und Weise lassen sich die beiden Basissignale B1 und B2 gemeinsam nutzen, um die Drehstellung, die Drehgeschwindigkeit und die Drehrichtung der Kodierscheibe 16 zu bestimmen.

Gemäß dem hier vorgeschlagenen Verfahren jedoch sollen die beiden Basissignale B1 und B2 nicht einfach an die Motorsteuerungseinheit 4 übermittelt und mit der Basisauswerteeinheit 26 ausgewertet werden, sondern stattdessen im Modulator 24 in Transfersignale T1 und T2 umgewandelt werden. Hierfür ist eine Zeitquantisierung derart vorgegeben dass durch eine entsprechende Wandlung der Basissignale B1 und B2 im Modulator 24 nur diskrete Drehgeschwindigkeiten mit den Transfersignalen T1 und T2 übermittelt werden. Die Basissignale B1 und B2 werden dabei quasi einer Drehgeschwindigkeitsquantisierung, ähnlich einer Analog-Digital-Umsetzung, unterworfen. Infolgedessen sind, ausgehend von einer Phasenlage von 90° zwischen den beiden Basissignalen B1 und B2, nur diskrete drehgeschwindigkeitsabhängige Zeitabstände Δt_{D} zwischen einem Signalpegelwechsel im Transfersignal T1 und einem Signalpegelwechsel im Transfersignal T2 erlaubt. Der Wertebereich zwischen zwei diskreten drehgeschwindigkeitsabhängigen Werten für die Phasenbeziehung steht dann zur Verfügung, um die Zusatzinformationen durch eine Manipulation der Phasenbeziehung im Modulator 24 aufzumodulieren, so dass sich die Transfersignale T1 und T2 auch durch eine geänderte Phasenbeziehung von den Basissignalen B1 und B2 unterscheiden.

Gemäß einer besonders einfachen Variante werden durch Manipulation der Phasenbeziehung lediglich Triggersignale an die Motorsteuerungseinheit 4 übermittelt. Dazu werden zunächst für die Zeitabstände Δt_{D} in den Transfersignale T1 und T2 Werte aus der Folge 40 µs, 60 µs, 80 µs, usw. als durch die Zeitquantisierung festgelegte drehgeschwindigkeitsabhängige Werte für die Phasenbeziehung vorgegeben. Zur Übermittelung eines Triggersignals wird dann eine Phasenverschiebung im Modulator 24 vorgenommen, so dass in den Transfersignalen T1 und T2 für die Zeitdifferenz Δt_{T} Werte aus der Folge 30 µs, 50 µs, 70 µs, usw. vorliegen, die dann im Demodulator 28 als Triggersignale erkannt werden.

Die für ein Triggersignal vorgenommene Phasenverschiebung wird hierbei zeitlich begrenzt, indem ein Zustand in einem der Basissignale B1,B2, die einer Zeitquantisierung unterworfen wurden, in seiner Zeitdauer ausgedehnt wird und zudem der sich daran anschließende oder vorausgehende Zustand zeitlich verkürzt wird. Diese Situation ist in FIG 3 gezeigt. Die beiden darin dargestellten Transfersignale T1 und T2 unterscheiden sich nur dadurch von den zeitquantisierten Basissignalen B1 und B2, dass in den Zeitabschnitten ΔT jeweils ein Triggersignal vorliegt. Die Phasenbeziehung in den Zeitabschnitten ΔT ist dabei gegeben durch den zeitlichen Abstand Δt_{T} zwischen den Signalpegelwechseln, also den Flanken der Rechtecksignale. Dieser zeitliche Abstand Δt_{T} wird im Demodulator 28 detektiert und als Triggersignal erkannt und gewertet. Durch den hier exemplarisch gewählten zeitlichen Versatz der beiden Wertefolgen für die Zeitdifferenzen Δt_{D} und Δt_{T} von 10 µs wird dabei sichergestellt, dass typischerweise vorliegende unerwünschte Schwankungen in der Phasenbeziehung der Transfersignale T1 und T2 nicht zu einer fehlerhaften Auswertung führen. Bei der Wahl eines geeigneten minimalen zeitlichen Versatzes ist dabei einerseits darauf zu achten, dass dieser größer ist, als die typischerweise vorliegenden unerwünschten Schwankungen der Phasenbeziehung der Transfersignale T1 und T2, und andererseits muss der gewählte zeitlichen Versatz groß genug sein, dass dieser bei maximaler Drehgeschwindigkeit des Elektromotors 2 und bei gegebenem zeitlichen Auflösevermögen vom Demodulator 28 und von der Basisauswerteeinheit 26 noch erfasst werden kann.

Alternativ ist für die Zeitdifferenz Δt_{T} bei einem Triggersignal keine Wertefolge sondern ein einziger Wert oder vielmehr ein Wertebereich vorgesehen, z.B. von 5 µs bis 30 µs, der unterhalb des niedrigsten Wertes aus der Wertefolge für die Zeitabstände Δt_{D} (entspricht dem Wert bei der höchsten vorgesehenen Motordrehzahl) und oberhalb der zeitlichen Auflösungsgrenze liegt.

Die beiden Transfersignale T1 und T2 werden dann über die "Quadratur-Schnittstelle" (Quadrature Encoder Interface), eine zweiadrige elektrische Leitung, an die Motorsteuerungseinheit 4 übertragen und dort parallel in die Basisauswerteeinheit 26 einerseits und den Demodulator 28 andererseits eingespeist. Die Auswertung der Transfersignale T1 und T2 durch die Basisauswerteeinheit 26 erfolgt nach einem an sich bekannten Prinzip, wobei ein Basiszähler BZ einen zeitabhängigen Zählerwert ermittelt. Der aktuelle Zählerwert gibt dabei die aktuelle Drehstellung der Kodierscheibe 16 wieder und aus der zeitlichen Änderung des Zählerwertes lassen sich die Drehgeschwindigkeit und die Drehrichtung der Kodierscheibe 16 ermitteln. Der Zählerwert des Basiszählers BZ ändert sich mit jedem auftretenden Signalpegelwechsel in den Transfersignalen T1 und T2, wobei je nach Art des Signalpegelwechsels eine Änderung um +1 oder minus -1 erfolgt. Die hier möglichen Varianten sind:

| **Signalpegelwechsel** | **bei Signalpegel** | **Änderung Zählerwert BZ** | **Drehrichtung Elektromotor** |
|---|---|---|---|
| | | | |
| T1 von 0 auf 1 | T2 bei 1 | -1 | entgegen dem Uhrzeigersinn |
| T2 von 0 auf 1 | T1 bei 0 | -1 | entgegen dem Uhrzeigersinn |
| T1 von 1 auf 0 | T2 bei 0 | -1 | entgegen dem Uhrzeigersinn |
| T2 von 1 auf 0 | T1 bei 1 | -1 | entgegen dem Uhrzeigersinn |
| | | | |
| T1 von 0 auf 1 | T2 bei 0 | +1 | im Uhrzeigersinn |
| T2 von 0 auf 1 | T1 bei 1 | +1 | im Uhrzeigersinn |
| T1 von 1 auf 0 | T2 bei 1 | +1 | im Uhrzeigersinn |
| T2 von 1 auf 0 | T1 bei 0 | +1 | im Uhrzeigersinn |

Die durch den zeitlichen Verlauf des Zählerwertes des Basiszählers BZ repräsentierten Bewegungszustandsinformationen des Elektromotors 2 werden in der Basisauswerteeinheit 26 für eine Weiterverarbeitung in der Steuerungslogik 30 umkodiert und nachfolgend an diese weitergeleitet.

Parallel erfolgt im Demodulator 28 eine zweite Auswertung der Transfersignale T1 und T2. Dabei wird ein Zusatzzähler ZZ bei jedem Auftreten eines Triggersignals zunächst ausgelesen und danach zurück auf null gesetzt. In der Folge bedingt jeder Signalpegelwechsel in den Transfersignalen T1 und T2 eine Änderung des Zählerwertes um +1, bis schließlich beim nächsten Triggersignal der Zählerwert wieder ausgelesen wird und nachfolgend auf null zurückgesetzt wird. Der ausgelesene Zählerwert, der mit jedem Datenpaket an die Motorsteuerungseinheit 4 übermittelt wird, entspricht der kodierten Zusatzinformation, die in diesem Datenpaket enthalten ist. Dabei handelt es sich um einen Zahlenwert zwischen 0 und 17, so dass mit jedem Datenpaket eine Datenmenge von einem Nibbel übermittelt wird. Der Zahlenwert wird dann an die Dekodierungseinheit 32 übertragen, in der die Zusatzinformationen durch eine geeignete Umkodierung für die Ausgabe an die Steuerungslogik 30 aufbereitet werden.

Wie bereits zuvor erwähnt, ist die Signalpegelwechselfrequenz abhängig von der Motordrehzahl des Elektromotors 2, weswegen auch die Datenübertragungsrate für die Zusatzinformationen von der Motordrehzahl abhängig ist. Um sicherzustellen, dass die Datenübertragungsrate nicht unter ein benötigtes Minimum fällt, wechselt der Modulator 24 aus dem Basisbetriebsmodus in einen zweiten Betriebsmodus, sobald der zeitliche Abstand zwischen zwei aufeinander folgenden Signalpegelwechseln einen hinterlegten Schwellwert, hier 60 ms, überschreitet. In diesem zweiten Betriebsmodus werden im Modulator 24 zusätzliche Rechteckpulse generiert und an die Motorsteuerungseinheit 4 übermittelt, wobei die Transfersignale T1 und T2 durch Superposition der Basissignale B1 und B2 mit einer Abfolge dieser Rechteckpulse erzeugt werden. Hierbei dienen Rechteckpulse mit einer kurzen Dauer P_{T} von 10 µs (+/- 3 µs) als Triggersignale und Rechteckpulse mit einer längeren Dauer P_{Z} von über 17 µs zur Beeinflussung des Zählerwertes des Zusatzzählers ZZ.

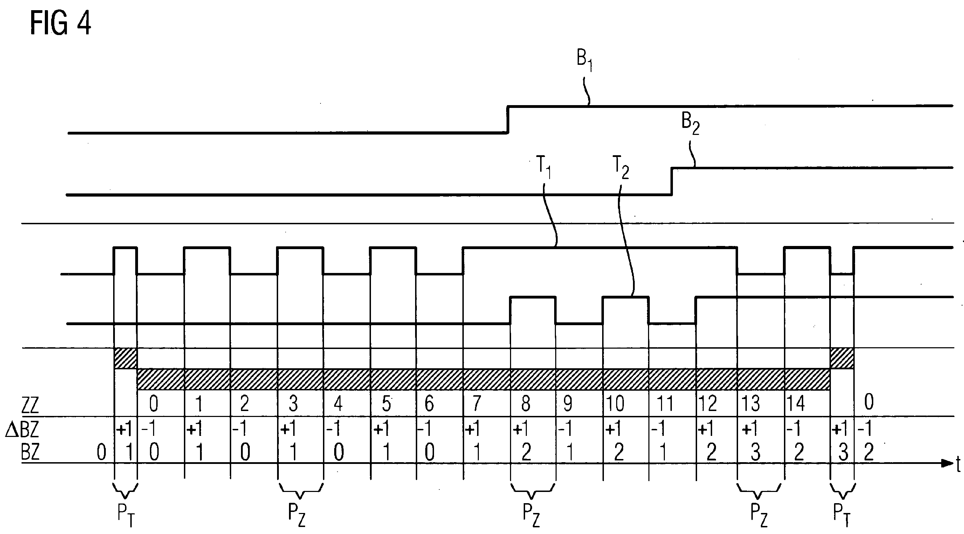

Im Basiszähler BZ hingegen bedingen die Rechteckpulse in der Summe keine Änderung des Zählerwertes, da die beiden Signalpegelwechsel eines jeden Rechteckpulses, wie in FIG 4 dargestellt, jeweils eine Änderung ΔBZ um +1 und -1 im Basiszähler BZ bewirken. Alternativ werden Rechteckpulse genutzt, bei denen die Reihenfolge der Änderungen ΔBZ des Zählerwertes umgekehrt ist, bei denen also die Signalpegelwechsel eine Änderung ΔBZ um -1 und +1 bewirken:

| **Rechteckpuls bei Signalpegel** | **Änderung Zählerwert BZ** | **aufgrund zweier Signalpegelwechsel** |
|---|---|---|
| | | |
| T1 bei 0 und T2 bei 0 | +1-1=0 | T1 von 0 auf 1 und T1 von 1 auf 0 |
| T1 bei 1 und T2 bei 0 | +1-1=0 | T2 von 0 auf 1 und T2 von 1 auf 0 |
| T1 bei 1 und T2 bei 1 | +1-1=0 | T1 von 1 auf 0 und T1 von 0 auf 1 |
| T1 bei 0 und T2 bei 1 | +1-1=0 | T2 von 1 auf 0 und T2 von 0 auf 1 |
| | | |
| T1 bei 0 und T2 bei 0 | -1+1=0 | T2 von 0 auf 1 und T2 von 1 auf 0 |
| T1 bei 1 und T2 bei 0 | -1+1=0 | T1 von 1 auf 0 und T1 von 0 auf 1 |
| T1 bei 1 und T2 bei 1 | -1+1=0 | T2 von 1 auf 0 und T2 von 0 auf 1 |
| T1 bei 0 und T2 bei 1 | -1+1=0 | T1 von 0 auf 1 und T1 von 1 auf 0 |

Dabei wird darauf geachtet, dass der zeitliche Abstand zwischen zwei Signalpegelwechseln in den Transfersignalen T1 und T2, also einer in T1 und einer in T2, mindestens 9 µs beträgt. Auch hier ist bei der Wahl eines geeigneten minimalen zeitlichen Abstand einerseits darauf zu achten, dass dieser größer ist, als die typischerweise vorliegenden unerwünschten Schwankungen der Phasenbeziehung der Transfersignale T1 und T2, und andererseits muss der gewählte zeitlichen Versatz groß genug sein, dass dieser bei gegebenem zeitlichen Auflösevermögen noch erfasst werden kann.

Steigt die Motordrehzahl des Elektromotors 2 wieder über den vorgegebenen Schwellwert oder über einen zweiten Schwellwert an, so wechselt der Modulator 24 wieder zurück in den Basisbetriebsmodus.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen, wie er durch die nach folgenden Patentransprüche festgelegt wird.

## Patentansprüche

1. Verfahren zur Übermittelung von Informationen zwischen einem Elektromotor (2) und einer Motorsteuerungseinheit (4), wobei als Informationen Bewegungszustandsinformationen des Elektromotors (2) einerseits und Zusatzinformationen andererseits über zwei Übertragungskanäle übermittelt werden, und wobei die Bewegungszustandsinformationen in Form zweier Basissignale (B1,B2) vorliegen und wobei die Zusatzinformationen mit Hilfe der Basissignale (B1,B2) übermittelt werden, wobei zur Übermittelung der Informationen zumindest zwei Transfersignale (T1,T2) genutzt werden, wobei jedes Transfersignal (T1,T2) über einen eigenen Übertragungskanal übermittelt wird, wobei zwischen den beiden Basissignalen (B1,B2) eine Phasenbeziehung (Δt_{D}) gegeben ist, wobei eines der beiden Basissignale (B1) unverändert als eines der Transfersignale (T1) genutzt wird und wobei das andere Basissignal (B2) durch Manipulation der Phasenbeziehung in das andere Transfersignal (T2) umgewandelt wird.

2. Verfahren nach Anspruch 1,
wobei die Zusatzinformationen in Form von Datenpaketen übermittelt werden.

3. Verfahren nach Anspruch 2,
wobei zur Kennzeichnung des Anfangs und des Endes eines jeden Datenpaketes je ein Triggersignal dem Transfersignal (T1,T2) übermittelt wird.

4. Verfahren nach Anspruch 3,
wobei zur Generierung des Transfersignals (T1,T2) Triggersignale in die Basissignale (B1,B2) eingefügt werden und wobei das Transfersignal (T1,T2) in den Zeitabschnitten zwischen den Triggersignalen den unveränderten Basissignalen (B1,B2) entspricht.

5. Verfahren nach Anspruch 3 oder 4,
wobei mit jedem Datenpaket ein Zahlenwert übermittelt wird, der durch die Anzahl von Ereignissen im zeitlichen Verlauf des Transfersignals (T1,T2) zwischen zwei Triggersignalen gegeben ist, und wobei als Zahlenwerte bevorzugt nur Werte aus einer vorgegebenen Wertemenge genutzt werden.

6. Verfahren nach Ansprüche 1 bis 5,
wobei eine bestimmte Phasenbeziehung (Δt_{T}) als Triggersignal fungiert.

7. Verfahren nach einem der Ansprüche 1 bis 6,
wobei eine Zeitquantisierung mit diskreten Werten vorgenommen wird, so dass auch für die Phasenbeziehung (Δt_{D}) nur diese Werte vorgesehen sind und wobei diese Werte zur Kodierung der Zusatzinformationen genutzt werden.

8. Verfahren nach einem der Ansprüche 1 bis 7,
wobei die Bewegungszustandsinformationen des Elektromotors (2) mittels eines Inkrementalgebers (8) generiert werden und wobei zur Übermittelung der Informationen zwischen dem Elektromotor (2) und der Motorsteuerungseinheit (4) eine Quadratur-Schnittstelle mit zwei Übertragungskanälen genutzt wird.

9. Verfahren nach einem der Ansprüche 1 bis 8,
wobei als Basissignale (B1,B2) und als Transfersignale (T1,T2) jeweils binäre Signale genutzt werden.

10. Verfahren nach Anspruch 1 und 9,
wobei ein jeweiliges Ereignis durch einen Signalpegelwechsel gegeben ist.

11. Verfahren nach einem der Ansprüche 1 bis 10,
wobei bedarfsweise in Abhängigkeit des Betriebszustandes zumindest eines der Transfersignale (T1,T2) durch Superposition eines der Basissignale (B1,B2) und eines Zusatzsignals, welches die Zusatzinformationen trägt, generiert wird.

12. Verfahren nach Anspruch 11,
wobei das Zusatzsignal als eine Abfolge von Pulsen erzeugt wird., wobei die Motorsteuerungseinheit (4) einen Zähler (BZ)
umfasst, mit dem die Transfersignale (T1,T2) ausgewertet werden und der die Bewegungszustandsinformationen als zeitabhängigen Zählerwert ausgibt, und wobei das Zusatzsignal derart generiert wird, dass sich der Zählerwert durch einen Puls nicht ändert.

13. Vorrichtung mit einer Motorsteuerungseinheit (4) zur Übermittelung von Informationen zwischen einem Elektromotor (2) und der Motorsteuerungseinheit (4), mit einer Sensoreinheit (6), die zur Generierung von Bewegungszustandsinformationen einen Inkrementalgeber (8) umfasst, wobei als Informationen einerseits Bewegungszustandsinformationen des Elektromotors (2) und andererseits Zusatzinformationen über zwei Übertragungskanäle zur Übermittlung vorgesehen sind, wobei die Bewegungszustandsinformationen in Form zweier Basissignale (B1,B2) vorliegen und die Basissignale (B1,B2) auch zur Übermittlung der Zusatzinformationen dienen, wobei zur Übermittelung der Informationen zumindest zwei Transfersignale (T1,T2) dienen, deren Übermittelung jeweils über einen eigenen Übertragungskanal vorgesehen ist, wobei zwischen den beiden Basissignalen (B1,B2) eine Phasenbeziehung (Δt_{D}) gegeben ist, wobei eines der beiden Basissignale (B1)unverändert als eines der Transfersignale (T1) dient und wobei das andere Basissignal (B2) durch Manipulation der Phasenbeziehung in das andere Transfersignal (T2) umgewandelt ist.

## Claims

1. Method for transmitting information between an electric motor (2) and a motor control unit (4) wherein, as information, motion state information of the electric motor (2) on the one hand and additional information on the other hand is transmitted via two transmission channels, and wherein the motion state information is in the form of two base signals (B1, B2) and wherein the additional information is transmitted with the aid of the base signals (B1, B2), wherein at least two transfer signals (T1, T2) are used for transmitting the information, wherein each transfer signal (T1, T2) is transmitted via a separate transfer channel, wherein a phase relationship (Δt_{D}) is given between the two base signals (B1, B2), wherein one of the two base signals (B1) is used unchanged as one of the transfer signals (T1) and wherein the other base signal (B2) is converted into the other transfer signal (T2) by manipulation of the phase relationship.

2. Method according to claim 1,
wherein the additional information is transmitted in the form of data packets.

3. Method according to claim 2,
wherein for identifying the start and end of each data packet, one trigger signal respectively is transmitted to the transfer signal (T1, T2).

4. Method according to claim 3,
wherein for generating the transfer signal (T1, T2) trigger signals are inserted into the base signal (B1, B2) and wherein the transfer signal (T1, T2) in the periods between the trigger signals corresponds to the unchanged base signal (B1, B2).

5. Method according to claim 3 or 4,
wherein a numerical value is transmitted with each data packet, and this is given by the number of events in the course over time of the transfer signal (T1, T2) between two trigger signals, and wherein preferably only values from a specified value set are used as the numerical values.

6. Method according to claim 1 to 5,
wherein a specific phase relationship (Δt_{T}) acts as the trigger signal.

7. Method according to one of claims 1 to 6,
wherein a time quantisation is performed with discrete values, so that only these values are provided for the phase relationship (Δt_{D}) as well and wherein these values are used for encoding the additional information.

8. Method according to one of claims 1 to 7,
wherein the motion state information of the electric motor (2) is generated by means of an incremental encoder (8) and wherein a quadrature encoder interface with two transmission channels is used for transmitting the information between the electric motor (2) and the motor control unit (4).

9. Method according to one of claims 1 to 8,
wherein in each case binary signals are used as base signals (B1, B2) and transfer signals (T1, T2).

10. Method according to claim 1 and 9,
wherein a respective event is given by a change in signal level.

11. Method according to one of claims 1 to 10,
wherein, as required as a function of the operating state, at least one of the transfer signals (T1, T2) is generated by superposition of one of the base signals (B1, B2) and an additional signal which carries the additional information.

12. Method according to claim 11,
wherein the additional signal is generated as a sequence of pulses, wherein the motor control unit (4) comprises a counter (BZ) with which the transfer signals (T1, T2) are evaluated and which outputs the motion state information as a time-dependent counter value, and wherein the additional signal is generated in such a way that the counter value does not change due to a pulse.

13. Device with a motor control unit (4) for transmitting information between an electric motor (2) and the motor control unit (4), having a sensor unit (6) comprising an incremental encoder (8) for generating motion state information, wherein, as information, motion state information of the electric motor (2) on the one hand and additional information on the other hand is provided for transmission via two transmission channels, wherein the motion state information is in the form of two base signals (B1, B2) and the base signals (B1, B2) are also used for transmitting the additional information, wherein at least two transfer signals (T1, T2) are used for transmitting the information, the transmission of which being provided in each case via a separate transfer channel, wherein a phase relationship (Δt_{D}) is given between the two base signals (B1, B2), wherein one of the two base signals (B1) is used unchanged as one of the transfer signals (T1) and wherein the other base signal (B2) is converted into the other transfer signal (T2) by manipulation of the phase relationship.

## Revendications

1. Procédé de transmission d'informations entre un moteur ( 2 ) électrique et une unité ( 4 ) de commande du moteur, des informations d'état de mouvement du moteur ( 2 ) électrique, d'une part, et des informations supplémentaires, d'autre part, étant transmises par deux canaux de transmission et les informations d'état de mouvement étant sous la forme de deux signaux ( B1, B2 ) de base et les informations supplémentaires étant transmises à l'aide des signaux ( B1, B2 ) de base, dans lequel, pour la transmission des informations, on utilise au moins deux signaux ( T1, T2 ) de transfert, chaque signal ( T1, T2 ) de transfert étant transmis par son propre canal de transmission, dans lequel il y a une relation ( Δt_{D} ) de phase entre les deux signaux ( B1, B2 ) de base, l'un des deux signaux ( B1 ) de base étant utilisé inchangé comme l'un des signaux ( T1 ) de transfert, tandis que l'autre signal ( B2 ) de base est transformé en l'autre signal ( T2 ) de transfert par une manipulation de la relation de phase.

2. Procédé suivant la revendication 1,
dans lequel on transmet les informations supplémentaires sous la forme de paquets de données.

3. Procédé suivant la revendication 2,
dans lequel, pour la caractérisation du début et de la fin d'un paquet de données, on transmet un signal de déclenchement au signal ( T1, T2 ) de transfert.

4. Procédé suivant la revendication 3,
dans lequel, pour créer le signal ( T1, T2 ) de transfert, on insère des signaux de déclenchement dans les signaux (B1, B2 ) de base et dans lequel le signal ( T1, T2 ) de transfert correspond dans les intervalles de temps entre les signaux de déclenchement aux signaux ( B1, B2 ) de base inchangés.

5. Procédé suivant la revendication 3 ou 4,
dans lequel on transmet avec chaque paquet de données une valeur de nombre, qui est donnée par le nombre d'événements dans le laps de temps du signal ( T1, T2 ) de transfert entre deux signaux de déclenchement et dans lequel on utilise comme valeur de nombre de préférence seulement des valeurs d'un ensemble de valeurs donné à l'avance.

6. Procédé suivant les revendications 1 à 5,
dans lequel une relation ( Δt_{T} ) de phase définie sert de signal de déclenchement.

7. Procédé suivant l'une des revendications 1 à 6,
dans lequel on effectue une quantification temporelle à valeurs discrètes de manière à prévoir également pour la relation ( Δt_{D} ) de phase seulement ces valeurs, et dans lequel on utilise ces valeurs pour coder les informations supplémentaires.

8. Procédé suivant l'une des revendications 1 à 7,
dans lequel on crée les informations d'état de mouvement du moteur ( 2 ) électrique au moyen d'un transmetteur ( 8 ) incrémental et dans lequel, pour transmettre les informations entre le moteur ( 2 ) électrique et l'unité ( 4 ) de commande du moteur, on utilise une interface en quadrature à deux canaux de transmission.

9. Procédé suivant l'une revendications 1 à 8,
dans lequel on utilise comme signaux ( B1, B2 ) de base et comme signaux ( T1, T2 ) de transfert respectivement des signaux binaires.

10. Procédé suivant la revendication 1 et 9,
dans lequel un changement de niveau du signal est un événement.

11. Procédé suivant l'une des revendications 1 à 10,
dans lequel, en cas de besoin, on crée en fonction de l'état de fonctionnement au moins l'un des signaux ( T1, T2 ) de transfert par superposition de l'un des signaux ( B1, B2 ) de base et d'un signal supplémentaire qui porte les informations supplémentaires.

12. Procédé suivant la revendication 11,
dans lequel on produit le signal supplémentaire sous la forme d'une séquence d'impulsions, l'unité ( 4 ) de commande du moteur comprenant un compteur ( BZ ) par lequel on exploite les signaux ( T1, T2 ) de transfert et qui émet les informations d'état de mouvement sous la forme d'une valeur du compteur en fonction du temps, le signal supplémentaire étant créé de manière à ce que la valeur du compteur ne soit pas modifiée par une impulsion.

13. Dispositif comprenant une unité ( 4 ) de commande d'un moteur pour transmettre des informations entre un moteur ( 2 ) électrique et l'unité ( 4 ) de commande du moteur, comprenant une unité ( 6 ) formant capteur qui comprend, pour créer des informations d'état de mouvement, un transmetteur ( 8 ) incrémental, dans lequel il est prévu, pour la transmission par deux canaux de transmission, comme informations, d'une part, des informations d'état de mouvement du moteur ( 2 ) électrique et, d'autre part, des informations supplémentaires, les informations d'état de mouvement se présentant sous la forme de deux signaux ( B1, B2 ) de base, et les signaux ( B1, B2 ) de base servant également à la transmission des informations supplémentaires, dans lequel, pour la transmission des informations, on se sert d'au moins deux signaux ( T1, T2 ) de transfert, dont la transmission est prévue respectivement par leur propre canal de transmission, dans lequel il y a une relation ( Δt_{D} ) de phase entre les deux signaux (bai, B2 ) de base, l'un des deux signaux ( B1 ) de base inchangé servant de l'un des signaux ( T1 ) de transfert, tandis que l'autre signal ( B2 ) de base est transformé en l'autre signal ( T2 ) de transfert par manipulation de la relation de phase.
